# EUROPEAN PATENT SPECIFICATION

(11) **EP 1 362 467 B1**
(45) Date of publication and mention of the grant of the patent: **05.08.2009**
(21) Application number: 02738555.8
(22) Date of filing: 22.02.2002
(51) Int. Cl.: G06F 17/30

(54) **SYSTEM FOR PROVIDING ELECTRONIC CONTACT INFORMATION FROM A CENTRAL SOURCE AND METHOD FOR UPDATING CONTACT INFORMATION**
SYSTEM ZUM BEREITSTELLEN VON ELEKTRONISCHEN KONTAKTINFORMATIONEN AUS EINER ZENTRALEN QUELLE UND VERFAHREN ZUR AKTUALISIERUNG DER KONTAKTINFORMATIONEN
SYSTEME DE FOURNITURE D'INFORMATIONS DE CONTACT ELECTRONIQUES PROVENANT D'UNE SOURCE CENTRALE ET PROCEDE DE MISE A JOUR DES INFORMATIONS DE CONTACT

(30) Priority: 22.02.2001 US 270167 P; 18.04.2001 US 836547
(43) Date of publication of application: 19.11.2003
(73) Proprietor: Reuters Transaction Services Limited, 1207 Geneva (CH)
(72) Inventor: SOMERS, Christopher, Hyland, Glasgow G12 9PR (GB); ROBERTSON, Euphemia Isabel Weir, Kidbrooke Grove, Blackheath SE3 0PH (GB); OTTO, Oliver, London W6 0RW (GB)
(74) Representative: Gray, Peter John Bracey
(86) International application number: PCT/IB2002/002553
(87) International publication number: WO 2002/082771

(56) References cited:
- EP-A- 0 852 351
- EP-A- 0 893 759
- EP-A- 1 056 029
- WO-A-00/17783
- WO-A-00/62576
- WO-A-97/41520
- FR-A- 2 741 733
- US-A- 6 006 274
- US-A- 6 052 735
- US-A- 6 151 628
- "DIALOG WORLD REPORTE" DIALOG WORLD REPORTE, XP002935694
- PATENT ABSTRACTS OF JAPAN vol. 1997, no. 11, 28 November 1997 (1997-11-28) & JP 09 179954 A (TOSHIBA CORP), 11 July 1997 (1997-07-11)

## Description

### Field of the invention:

The present invention relates to an information exchange system. More particularly, the present invention relates to updating contact information through a remote source.

### Background of the invention:

Physical business cards, calling cards, and the like (made from, for example, paper or plastic) are ubiquitous. Such cards typically provide personal contact information such as the card giver's name, title, business and/or personal address, office and/or home telephone number, facsimile number, and cell phone number. However, because such information is permanently fixed to each card, the cards frequently become partly or entirely out of date or otherwise obsolete. For example, an individual's job title may change, or that individual may be physically relocated within a company such that the relevant telephone and/or facsimile numbers change. So, when giving a business card or calling card to another, one typically needs to write on the card to correct or obliterate the incorrect information. Also, the information conveyed is limited to that already appearing on the card. Therefore, an individual who may want to additionally provide, for example, his home telephone number, must handwrite it on the card. However, he may not have a writing implement available to write additional information, or his handwriting may be comparatively unintelligible.

Also, conventional physical business cards are notoriously inconvenient to handle (especially when received in large numbers, such as during a business convention) and are very prone to being lost. Conversely, an individual may unexpectedly run out of individual business cards at a large gathering (such as a business convention). In this situation it is at least very difficult and/or expensive to obtain additional business cards, and it is sometimes completely impossible to do so.
Electronic business cards are also known. For example, the PALM^{™} OS 3. x permits users to designate one address stored in a PALM^{™} personal data assistant (or PDA) as one's electronic business card. One then is free to transmit this business card to others. Provided that the owner (or author) of the electronic business card to be transmitted has kept the business card's information current, the recipient knows that the information should be current when received. Nonetheless, this electronic information may quickly become stale like that of printed business cards.
PCT application WO 0062576 discloses a server that stores data sets corresponding to PDAs and permits synchronisation between each of the PDAs and the data set stored on the server.

EP 0 893 759 discloses a method for retreiving document related information by a portable device by means of a taken.

### Summary of the Invention

The present invention alleviates the problem of stale business cards. The invention also alleviates the problem of stale directories (for example this could be employee databases or client directories). The invention is also applicable to non-business related contact information. The present invention includes providing initial contact information to a recipient with the recipient being selectively permitted to later update the received information from a remote source.

It is further described that the recipient is provided with a token to retrieve the remotely stored contact information. The recipient does not receive all of the available contact information but receives a subset or merely a token or pointer to where the remotely stored information may be obtained.

In a second aspect of the invention, the recipient may update the received contact information to ensure that the recipient's information is current. The updating may occur once, periodically, when desired, and at other times as well.

For example, one individual may offer another individual his or her information in electronic form If any changes, additions, or deletions are made to the information, the person who offered the information stores that changed information at an accessible location (such as a remote server). Thus, the receiving individual may then retrieve the current information from the accessible location, such that the receiving individual will have current information about the offering individual.

### Summary of the invention

The present invention is described in view of various embodiments. These embodiments are not intended to be limiting. The elements and steps of the present invention are found in the claims.

### Brief Description of the Drawings

Embodiments of the present invention are understood with reference to the drawings appended hereto, in which:

Figure 1 is a flow chart illustrating, broadly, the process of providing current information to a requestor;

Figure 2 illustrates a network topology for providing functionality according to the present invention; and

Figure 3 illustrates certain details of a network configuration for providing functionality according to the present invention.

### Detailed Description of the Embodiments

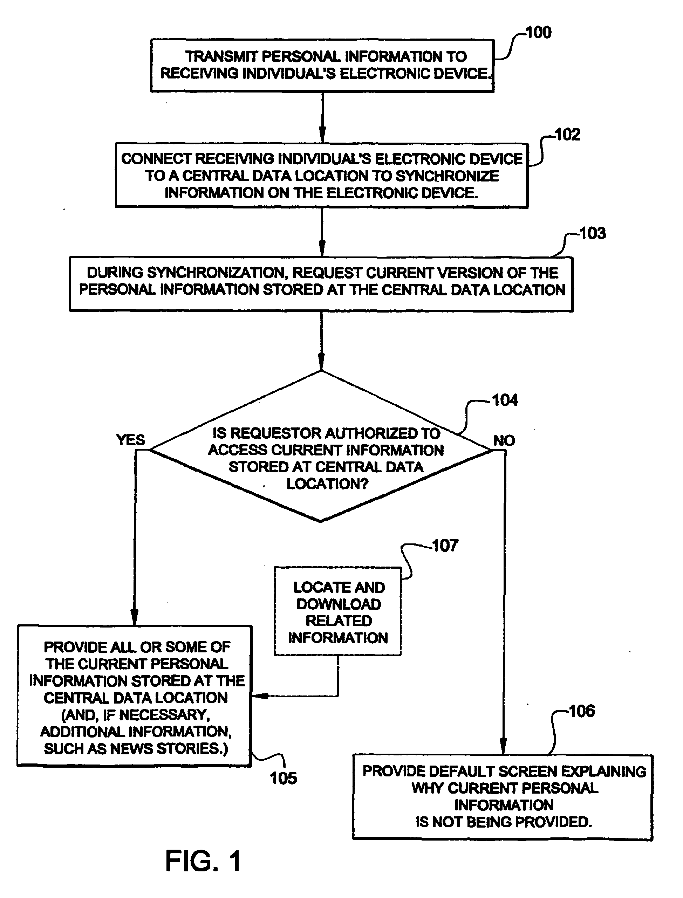

Figure 1 is a flow chart illustrating a general process flow of data. One individual (i.e., an originating individual or originator) electronically provides another individual (i.e., the receiving individual or recipient) with his or her information in step 100. The information is transmitted from the originating individual to the receiving individual by transmitting the information from an electronic device belonging to the originating individual to an electronic device belonging to the receiving individual. The receiving individual may synchronize the received information with current information available at a remotely accessible site as shown in step 102. During synchronization, the current version of information is requested in step 103. The remote site determines whether the requestor (i.e. the receiving individual) is authorized to access the information stored at the remote site in step 104. If permissions have been granted, some or all of the information about the originating party is provided in step 105. If permissions have not been granted, the system informs the user that the contact information is not being provided (step 106).

In one embodiment, at least some information may be transmitted between personal data assistants (such as those commercially available under brand names such as Palm^{™}, Blackberry^{™}, Handspring^{™}, Psion^{™}, Cassiopeia^{™}, and PocketPC^{™} (Cassiopeia, Jornada, and iPaq are three PDAs that use the PocketPC operating system) by way of a conventional infrared data interface. Other electronic devices may be used as well in any combination, including palmtop computers and Internet-enabled wireless telephones with data organizing functionality (these are known as smart phones and represent a convergence of PDAs and mobile phones). This exchange of electronic information takes place instead of, for example, the conventional exchange of paper business cards. The transmitting process may take a variety of forms including wireless transmissions (including infrared-based and radio-based) and wired transmissions (via a cable). Further, the transmission of the information may occur via email, transmissions to a web site, short IP messages to a device and the like. Alternative transmission paths include the SMS text messaging part of the GSM mobile phone protocol, and the Bluetooth protocol (i.e., a radio frequency based protocol).

The transmitted information may be provided in any suitable data format. In one example, the conventional vCard data format is used.

The embodiments described herein reference personal digital assistants (PDAs). However, it is expressly noted that other types of electronic devices can be also used according to the present invention including, without limitation, palmtop computers, desktop computers, laptop computers, and Internet-enabled wireless telephones having data organizing functionality.

In a first example, after receiving the transmitted information from the originating individual, the receiving individual has an initial version of the originating individual's information. As mentioned above, this information may include conventional information items, such as, without limitation, the originating individual's name, title, business address, telephone number, fax number, cell phone number, email address, and business and/or personal web site. The type of information items provided in block 100 may be customized as desired. The information included may also be third party data that may be optionally included with the rest of the profile (see step 107). One example of this is news headlines or other information relevant to a company or industry that are included with the personal information. This data can be updated regularly independent of the originator who only has to select a particular news feed when he set up the card. Thus, when the recipient of the profile looks at the contact data she can also see the latest, for example, news headlines about that person or company.

In a second example, the information passed to the receiving individual is less than all information available to be transmitted. For example, the originator may only transmit his name and organization to the receiving individual. This information may be accompanied by a token permitting access to a location storing the remainder of the originator's information. Further, the token may include a pointer to the storage location.

In a third example, the originator may desire to selectively permit certain types of information to be exchanged. Here, the originator may have a variety of tokens passable to the receiving individual. A first token may permit all of the originator's information to be later obtained. A second token may permit only business information to be obtained (for example, the place of business, work telephone number, work email and the like). A third token may permit only personal information to be obtained including home telephone number, home fax number, home address, home email, and the like. It will be appreciated that any number of tokens may be used with each having a different set of information that may 1) be included with the token and 2) permit remote updating of information. In this regard, at least three tokens may be assigned as work tokens. The first work token may include current work information and permission to permit the recipient of the token to update the work information. The second work token may include only the permission (and other related information) to retrieve the work information. The third work token may include some work information with the permission to retrieve additional work information from the accessible source.

Although 'work' token is a useful shorthand to describe the subset of information that the recipient is entitled to it should be stressed that the subset of information will be entirely for the originator to choose and not based on some predefined groups of data. The token will be determined by the information rather than the other way round. For example, the originator will choose which data fields should be passed on and the permission token will then be based on those fields indicating that they are to be accessible.

In the above examples, the originator of the information may also include a designation of the expiration of the token. So, for example, the originator may providing work information to the recipient but permit the recipient's received information to become stale after a designated period of time. This ability to permit tokens to expire permits the originator of the information to control who has access to the information and over what period. For example, if one were seeking estimates from builders, one would only have a temporary interest in providing information to the builders. So, even though builders may receive information from the originator, the information would be permitted to become stale. In a further example, the originator may permit the token to, in effect, self destruct and eliminate the originator's information from the recipient's collection of information.

The token is currently an entry in a data field that indicates to the server what other information fields the recipient is entitled to access. The token is meta data and is included with the other data. The token could be transferred on its own with the other data fields empty so that after synchronization the correct fields would then be filled in. The token may be encrypted data so that it is unreadable except by an authorized user. The underlying data may be included as part of this encrypted data to make it secure and stop unauthorized transfer of the data.

As mentioned above, information about the originating individual may change over time. For example and without limitation, the originating individual's name may change because of marriage or divorce. The individual's title may change because of a promotion, his business address may change because of a move, or his cell phone number may change because he lost his cell phone. As a result, the initial version of electronic information possessed by the receiving individual becomes out of date or otherwise inaccurate.

The present invention conveniently addresses this problem by taking advantage of the ability to periodically "synchronize" or "sync" a data assistant (or other data organizing device) with a parent computer (for example, a home or office computer). Synchronization is conventionally carried out so that, for example, appointment entries entered into the data assistant during the course of a day can be made to conform with a master scheduling calendar stored on, for example, an office computer. Synchronization is generally a known process in the field of electronic data organizers (such as personal digital assistants), so only a general description, emphasizing aspects particularly associated with the present invention, is provided here.

There are a number of services that rely on synchronization (e.g. AvantGo) and a number of software solutions that provide synchronizing technology for specific devices (HotSync for Palm, Active Sync for PocketPCs). For example, to use AvantGo the software relevant to a given PDA is downloaded, then 'channels' (which are web sites specially configured to be displayed on a PDA) are selected. When synchronization occurs, the software recognizes the selected channels and makes a connection (if it can) over the Internet to the AvantGo server. The software uses the user's login to detect user preferences and then downloads the latest versions of the selected channels to the PDA. There is a checking mechanism to stop a redundant download of channels that have not altered since the last sync. Once the download is complete the synchronizer disconnects from the server and any other syncing processes that remain for the PDA are completed. AvantGo runs on top of standard synchronization tools, e.g. HotSync. The present invention may operate on top of such tools in a similar manner.

A version of the originating individual's information is stored at a remotely accessible location. When the originating individual's information changes, that changed information is provided to the accessible site. For example, the originating individual may periodically review and update his stored information. The review process may occur by the originating individual accessing the remotely stored information. Alternatively, the originating individual may make local changes to the information he has on his PDA or other device and sync this information with the remotely accessible site. As above, the synchronization may occur in conjunction with other synchronization processes. Only the originating individual may update his details (i.e. appropriate security measures will be in place to ensure this, for example and without limitation, username and password login or Public Key Infrastructure (PKI).

In a specific example, the originating individual gives his or her information to the receiving individual by data exchange between digital assistants or other electronic devices by way of, for example, a conventional infrared data interface between the devices. The receiving individual can thereafter access the accessible site to receive a current version of the offered information, for example, during the conventional process of "synchronizing" data on a personal digital assistant with, for example, a home or office computer or other similar data organizing device.

The dissemination of an offering individual's information can be controlled. Access to the information can be controlled by associating an information access authorization level with a requestor requesting the current information from the accessible site. In another aspect of the present invention, the offering individual can control access to his or her current information by utilizing access control mechanisms at the accessible site. For example, the offering individual can identify certain individuals who are allowed only partial access to current information, or other individuals who are barred from receiving the current information.

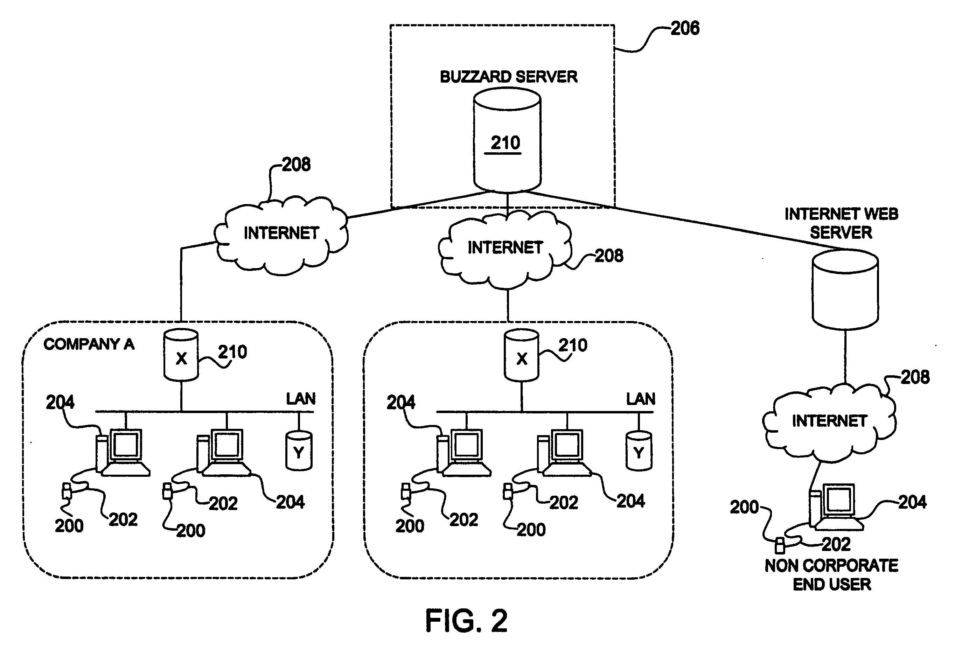

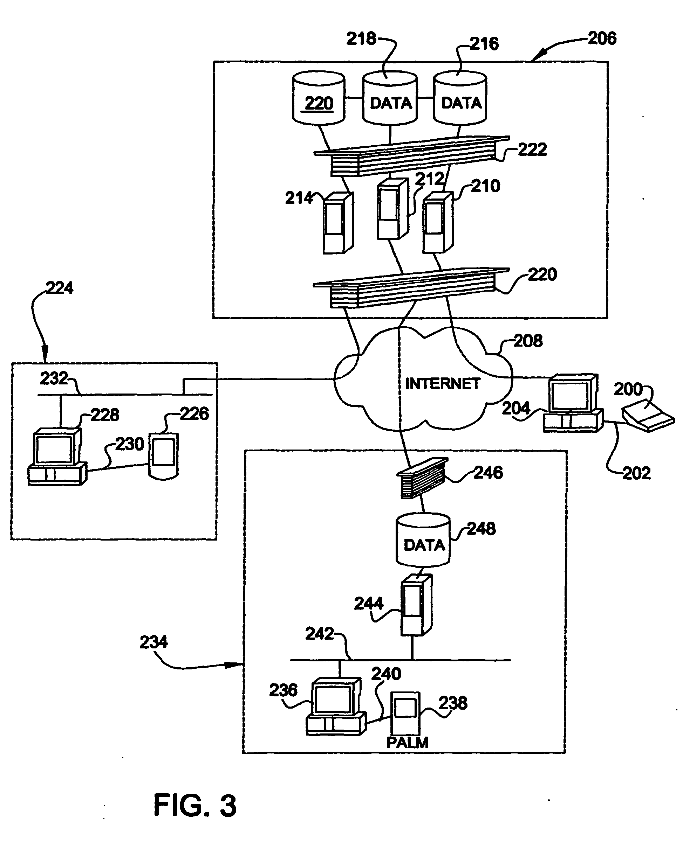

Therefore, from the receiving individual's viewpoint, synchronization of his electronic device additionally includes operably connecting the electronic device to an accessible site (block 102 in Figure 1, element 206 in Figures 2 and 3). In one example of the present invention, the receiving individual's electronic device 200 is connected to a desktop computer 204 by, for example, a standard data interface cable 202. The desktop computer 204 is in turn connected to accessible site 206 by way of, for example, a client-server data network. In one example of the present invention, the client-server data network may be the Internet 208 and the connection between desktop computer 204 and the Internet 208 may be of any conventional type, such as dial-up modem, DSL, etc.

The accessible site 206 may include at least one server 210 operably connected to the Internet 208 and to data storage 216.

The user interface for manipulating information located at accessible site 206 is, for example, an interactive world wide web site. The web site functionality may, for example, be provided by server 210. If desired, network firewalls 220 and 222 may be provided between the accessible site 206 and the Internet 208 and/or between server 210 and data storage 216, and operated in a known manner in accordance with network data security concepts.

Thus, as part of the process of synchronizing electronic device 200, a data connection is established between desktop computer 204/electronic device 200 and server 210. In one example, server 210 downloads the current information for the originating individual (which is stored in data storage 216) to desktop computer 204 and, in turn, electronic device 200 (for example, in response to a conventional client-server request). In addition, the server 210 may provide additional information items, beyond what is originally stored in electronic device 200. (For example, it may be desirable to provide an expanded amount of information that will be stored on desktop computer 204 because of limitations on the initial amount of information that can be stored on electronic device 200.)

In practice, it is desirable to permit the originating individual to control dissemination of his information and otherwise maintain the security of that information. This may include, without limitation, according a given receiving individual who wants to download current information from server 210 a certain level of access authorization. For example, a given receiving individual may only be authorized to view certain information (for example, business related information such as work address and work telephone number) and not other information (for example, contact information such as home address and home telephone number).

According to one aspect of the present invention, therefore, dissemination of information scan be controlled by providing a given receiving individual an electronic information access authorization token when the originating individual's information is first transmitted to the receiving individual. The access token may be any known data structure, such as, without limitation, a cookie or a data packet, containing details about the level of access accorded to the receiving individual.

The token may be encrypted data readable by the central server that will identify the following: which data fields are accessible, which data feeds are accessible, when the token was created (i.e. when the data was first passed to the recipient and a time to live' counter indicating how long (if appropriate) the token will remain valid.

According to another aspect of the present invention, the originating individual may selectively control access to his information by using access control mechanisms at server 210. For example, the originating individual could use another desktop computer 204 to access the web site for controlling server 210. In this regard, it should be remembered that a receiving individual may transmit the originating individual's information on to other entities, such that a "downstream" entity may seek further access to the originating individual's information. Therefore, when any individual or entity accesses accessible site 206, it may be useful to require them to identify themselves (for example, by a pre-access registration process, as is conventionally known). Thus, access to the information stored at accessible site 206 can be controlled by selectively setting access permissions for certain individuals or entities and/or by comparing the identity of the individual or entity requesting information with the aforementioned access token (which, for example, may include the identity of the individual to whom the access token was initially given). The ability to perform such controls may be secured by requiring an originating individual to enter a password or other pass code before manipulating access control mechanism at accessible site 206.

The foregoing describes embodiments for use by an individual. However, the present invention will be useful for both small and large businesses. Both of these embodiments are described below.

For a small business system 224, the basic arrangement of an electronic device 226 connected to, for example, a desktop computer 228 (using standard interface 230) is similar to the individual user case. However, the small business may have one or more computers 228 connected to a network backbone (for example, to define a local or wide area network). The backbone 232 is in turn connected to the Internet 208 and server 214 in a known manner. Thus, except for the differences in the networking architecture noted here, the operation of the small business system is substantially identical to the operation of the individual user system discussed above. A detailed description thereof is therefore omitted here, except to note that the user interface functionality of, for example, an interactive web site particularly associated with the small business may be provided on a unique server 214 at the accessible site 206. Server 214 is "unique" in that it is independent from, for example, a standard server 210 used by individual users, and may contain special content particularly associated with the small business. Also, making server 214 unique and/or independent may increase network security for the information handled by the small business.

A third embodiment relates to a system for use by a comparatively large business, as seen at 234. At a basic level, a desktop (or laptop) computer 236 is coupled, as needed, with an electronic device 238 by way of a standard interface 240. One or more computers 236 are connected by way of a network backbone 242. In this embodiment, however, the large business may operate its own web site, resident on its own server 244. Therefore, users in the large business use the user interface provided at the company's web site on server 244. Again, the company's own web site may use content specific to that company. In turn, server 244 is operably connected to a data network such as the Internet 208, as shown. If desired, a firewall 246 can be provided operably between the large business system and the Internet 208 in a manner in accordance with known network data security concepts.

Server 244 therefore interacts across Internet 208 with a corresponding server 212 at accessible site 206. In turn, server 212 manipulates stored information stored in data storage 218 as needed.

It may be useful for a business system to include a local database 248 in order to store and further organize information records collected by the business for internal business use, such as creating client lists or lists of potential clients. The present invention includes, for example, internally compartmentalizing information records. For example, one sales team may be internally in competition with another sales team, so that each team's collected information should not be shared. In this regard, the use of a local database also is applicable to the small business system 224.

For business systems, additional features may be provided. For example, if a given employee leaves the business, a network administrator or like individual may set the business's server to respond to a request for the former employee's information by providing a default data record. The data record may, for example, contain a short text message stating that the employee is no longer working for the business and suggesting an alternate contact within the company.

In general, the functionality of the present invention may be provided as a paid subscription service, wherein a subscriber (corresponding to one or more originating individuals as discussed above) obtain control access to accessible site 206 on a paid basis. Receiving individuals would generally not have to pay to request current information from accessible site 206, although they may desirably have to identify themselves in a pre-access registration process. Also, it may in some cases be necessary for receiving individuals to initially download appropriate software and/or browser plugins in order to access the system according to the present invention.

If an originating individual has changes in his data, a receiving individual may have access to archived data. For example, if an individual is promoted at his job, a receiving individual may be able to see that a change has taken place because the receiving individual can compare old and new information.

A receiving individual may be able to add customized fields to the profile. These fields will not be overwritten when the receiving individual synchronizes with the central server, but on the other hand, the fields will not be transferred to the central server, i.e., the centrally stored profile will not change.

Any kind of data may be stored on the profile, (e.g. a photo of the profile owner (i.e., the originating individual), an audio file containing the pronunciation of his name, etc.). This aspect of the invention is only limited by the technical capability of the electronic device.

The profile may be viewed on a proprietary application on the PDA. It may also be viewed in the standard address book of the device or in the address book of groupware applications, but in these cases functionality may be limited, (e.g., updates may only be possible if the profile is stored in the proprietary application, or certain fields may not be available in the address book).

In another example, the present invention is usable in a telephone call center environment. Conventionally, incoming calls are queued and then routed to a first available call operator (for example, a sales representative). Thus, a caller necessarily rarely (if ever) speaks to the same individual(s) that he or she spoke to on a prior call. In conjunction with the present invention, however, a caller may be provided with updated information identifying, for example, a given call operator's current work schedule, so that same call operator can be deliberately sought out by the caller. Similarly, the information provided to the caller may including information about a primary call operator, including, for example, identifying a designated alternative contact to be contacted by the caller in the absence of the primary call operator. Also, the information
provided to the caller may identify several call operators who each work on a given part of a company's business (e.g., in a particular business department), so again, a specific call operator can be sought out by a caller.

Thus, while there have been shown and described and pointed out fundamental novel features of the present invention as applied to preferred embodiments thereof, it will be understood that various omissions and substitutions and changes in the form and details of the devices illustrated, and in their operation, and in the method illustrated and described, may be made by those skilled in the art.

## Claims

1. A method of providing current information, comprising:
receiving and storing an initial version of information from an originating electronic device (200) at a server (210) on a data network;
receiving and storing a current version of the information at the server (210);
**characterized in that**:
the current version of the information is supplied to a requesting electronic device (200) in response to the requesting electronic device (200) requesting the current version of the information from the server (210); and
an electronic information access authorization token is received from the originating electronic device (200) at the requesting electronic device (200), the electronic information access authorization token identifying a device authorized to access information from said originating electronic device (200) and an information access authorization level associated with that device; and
wherein a predetermined portion of the current version of the information is supplied from the server (210) to the requesting electronic device (200) in dependence upon an identity of the requesting electronic device (200) and an information access authorization level associated with that device identified by the electronic information access authorization token received from the requesting electronic device (200).

2. The method according to claim 1, wherein the electronic information access authorization token is received at the requesting electronic device (200) directly from the originating electronic device (200).

3. The method according to claim 2, wherein the electronic information access authorization token is received over an infrared data interface between the originating electronic device (200) and the requesting electronic device (200).

4. The method according to any preceding claim, wherein the information comprises a plurality of data fields, and wherein the predetermined portion of the current version of information comprises a subset of said plurality of data fields.

5. The method according to claim 4, wherein the information access authorization token is received at the server (210) together with a plurality of empty data fields, and wherein the information access authorization token identifies a subset of the data fields that a requesting device is allowed to access.

6. The method according to claim 5, wherein the subset of empty data fields identified by the information access authorization token are filled in by the server (210) and supplied to the requesting devices (200).

7. The method according to any preceding claim, wherein receiving and storing a current version of the information comprises replacing originally stored information stored at the server (210) with the current version of the information.

8. The method according to claim 7, wherein, for the steps of receiving and supplying the current version of the information, the current version of the information includes information created by an individual to whom the information pertains, and the step of supplying includes supplying the current version of the information and additional content information.

9. The method according to any preceding claim, wherein the originating electronic device (200) and the requesting electronic device (200) comprise one of: electronic data organizer, including a digital assistant, a palmtop computer system, a laptop computer system, and a desktop computer system, and an Internet-enabled wireless telephone.

10. The method according to any preceding claim, wherein the current version of the information includes more data than the amount of the initial information stored.

11. The method according to any of claims 1 to 9, wherein the current version of the information includes less data than the amount of the initial information stored.

12. A system, comprising:
an originating electronic device (200) arranged to provide an initial version of information and a current version of information;
an information server (210) arranged to store the information received from the originating electronic device (200);
**characterized in that**:
the requesting electronic device (200) is arranged to receive an electronic information access authorization token from the originating electronic device (200), the electronic information access authorization token identifying a device authorized to access information from said originating electronic device (200) and an information access authorization level associated with that device; and
the information server (210) is arranged to supply a predetermined portion of the current version of information to the requesting electronic device (200) in response to the requesting electronic device (200) requesting the current version of the information from the server (210), wherein the predetermined portion is supplied in dependence upon an identity of the requesting electronic device (200) and an information access authorization level associated with that device identified by the electronic information access authorization token received from the requesting electronic device (200).

13. The system according to claim 12, herein the requesting electronic device is further arranged to receive the electronic information access authorization token directly from the originating electronic device (200).

14. The system according to claim 13, wherein the requesting electronic device is further arranged to receive the electronic information access authorization taken over an infrared data interface between the originating electronic device (200) and the requesting electronic device (200).

15. The system according to any one of claims 12 to 14, wherein the information comprises a plurality of data fields, and wherein the predetermined portion of the current version of information comprises a subset of said plurality of data fields.

16. The system according to claim 15, wherein the information server (210) is arranged to receive the information access authorization token together with a plurality of empty data fields, and wherein the information access authorization token identifies a subset of the data fields that a requesting device is allowed to access.

17. The system according to claim 16, wherein the information server (210) is arranged to fill the subset of empty data fields identified by the information access authorization token and to supply the filled data fields to the requesting device (200).

18. The system according to any one of claims 12 to 17, wherein one of the originating electronic device (200) and the requesting electronic device (200) includes an electronic device selected from the group consisting of a desktop computer, a laptop computer, a palmtop computer, a personal data assistant, and an Internet-enabled wireless telephone.

19. An information server for use in the system of any one of claims 12 to 18, the server being arranged to:
store an initial version of information and a current version of information received from an originating electronic device (200); and
supply the current version of the information to a requesting electronic device (200) in response to the requesting electronic device (200) requesting the current version of the information from the server (210); and
**characterized in that**:
the information server (210) is arranged to supply a predetermined portion of the current version of information to the requesting electronic device (200) in response to the requesting electronic device (200) requesting the current version of the information from the server (210), wherein the predetermined portion is supplied in dependence upon an identity of the requesting electronic device (200) and an information access authorization level associated with that device identified by the electronic information access authorisation token received from the requesting electronic device (200),
wherein the electronic information access authorization token is initially received by the requesting electronic device (200) from the originating electronic device (200).

## Patentansprüche

1. Verfahren zur Bereitstellung aktueller Information umfassend:
Empfangen und Speichern einer ersten Informationsversion von einer erzeugenden elektronischen Vorrichtung (200) an einem Server (210) in einem Datennetzwerk;
Empfangen und Speichern einer aktuellen Informationsversion am Server (210);
**dadurch gekennzeichnet dass**:
die aktuelle Informationsversion einer anfordernden elektronischen Vorrichtung (200) in Reaktion darauf bereitgestellt wird, dass die anfordernde elektronische Vorrichtung (200) die aktuelle Informationsversion vom Server (210) anfordert; und
ein Token für die Zugriffsberechtigung auf die elektronische Information von der erzeugenden elektronischen Vorrichtung (200) an der anfordernden elektronischen Vorrichtung (200) empfangen wird, wobei das Token für die Zugriffsberechtigung auf die elektronische Information eine Vorrichtung erkennt, die berechtigt ist, Information von der erzeugenden elektronischen Vorrichtung (200) und eine mit der Vorrichtung verknüpften Informationszugriffsberechtigungsebene abzurufen; und
wobei der anfordernden elektronischen Vorrichtung (200) ein vordefinierter Bestandteil der aktuellen Informationsversion vom Server (210) bereitgestellt wird, in Abhängigkeit von einer Identität der anfordernden elektronischen Vorrichtung (200) und einer mit der Vorrichtung verknüpften Informationszugriffsberechtigungsebene, die durch das Token für die Zugriffsberechtigung auf die elektronische Information, das von der anfordernden elektronischen Vorrichtung (200) empfangen wird, erkannt wird.

2. Verfahren nach Anspruch 1, wobei das Token für die Zugriffsberechtigung auf die elektronische Information an der anfordernden elektronischen Vorrichtung (200) direkt von der erzeugenden elektronischen Vorrichtung (200) empfangen wird.

3. Verfahren nach Anspruch 2, wobei das Token für die Zugriffsberechtigung auf die elektronische Information über eine Infrarotdatenschnittstelle zwischen der erzeugenden elektronischen Vorrichtung (200) und der anfordernden elektronischen Vorrichtung (200) empfangen wird.

4. Verfahren nach einem der vorhergehenden Ansprüche, wobei die Information eine Mehrzahl an Datenfeldern umfasst, und wobei der vordefinierte Bestandteil der aktuellen Informationsversion ein untergeordnetes Set der Mehrzahl an Datenfeldern umfasst.

5. Verfahren nach Anspruch 4, wobei das Token für die Zugriffsberechtigung auf die elektronische Information am Server (210) gemeinsam mit einer Mehrzahl an leeren Datenfeldern empfangen wird, und wobei das Token für die Zugriffsberechtigung auf die Information ein untergeordnetes Set der Datenfelder erkennt, auf das eine anfordernde Vorrichtung zugreifen darf.

6. Verfahren nach Anspruch 5, wobei das durch das Token für die Zugriffsberechtigung auf die Information erkannte untergeordnete Set an leeren Datenfeldern durch den Server (210) aufgefüllt und der anfordernden Vorrichtung (200) bereitgestellt wird.

7. Verfahren nach einem der vorhergehenden Ansprüche, wobei das Empfangen und Speichern einer aktuellen Informationsversion das Ersetzen von ursprünglich am Server (210) gespeicherter Information mit der aktuellen Informationsversion umfasst.

8. Verfahren nach Anspruch 7, wobei für die Schritte des Empfangens und Bereitstellens der aktuellen Informationsversion, die aktuelle Informationsversion Information umfasst, die durch eine Einzelperson erstellt wurde, zu der die Information gehört, und der Schritt des Bereitstellens das Bereitstellen der aktuellen Informationsversion und zusätzlicher Inhaltsinformation umfasst.

9. Verfahren nach einem der vorhergehenden Ansprüche, wobei die erzeugende elektronische Vorrichtung (200) und die anfordernde elektronische Vorrichtung (200) eines der Folgenden umfassen: elektronischer Data Organizer, umfassend einen digitalen Assistenten, ein Palmtop-Computersystem, ein Laptop-Computersystem, und ein Desktop-Computersystem und ein Internet-fähiges drahtloses Telefon.

10. Verfahren nach einem der vorhergehenden Ansprüche, wobei die aktuelle Informationsversion mehr Daten als die Menge der gespeicherten ursprünglichen Information umfasst.

11. Verfahren nach einem der Ansprüche 1 bis 9, wobei die aktuelle Informationsversion weniger Daten als die Menge der gespeicherten ursprünglichen Information umfasst.

12. System umfassend:
eine erzeugende elektronische Vorrichtung (200), die eingerichtet ist, um eine erste Informationsversion und eine aktuelle Informationsversion bereitzustellen;
einen Informationsserver (210), der eingerichtet ist, um die von der erzeugenden elektronischen Vorrichtung (200) empfangene Information zu speichern;
**dadurch gekennzeichnet dass**:
die anfordernde elektronische Vorrichtung (200) eingerichtet ist, um ein Token für die Zugriffsberechtigung auf die elektronische Information von der erzeugenden elektronischen Vorrichtung (200) zu empfangen, wobei das Token für die Zugriffsberechtigung auf die elektronische Information eine Vorrichtung erkennt, die berechtigt ist, Information von der erzeugenden elektronischen Vorrichtung (200) und eine mit der Vorrichtung verknüpften Informationszugriffsberechtigungsebene abzurufen; und
wobei der Informationsserver (210) eingerichtet ist, um der anfordernden elektronischen Vorrichtung (200) in Reaktion darauf, dass die anfordernde elektronische Vorrichtung (200) die aktuelle Informationsversion vom Server (210) anfordert, einen vordefinierten Bestandteil der aktuellen Informationsversion bereitzustellen, wobei der vordefinierte Bestandteil in Abhängigkeit von einer Identität der anfordernden elektronischen Vorrichtung (200) und einer mit der Vorrichtung verknüpften Informationszugriffsberechtigungsebene, die durch das Token für die Zugriffsberechtigung auf die elektronische Information, das von der anfordernden elektronischen Vorrichtung (200) empfangen wird, erkannt wird.

13. System nach Anspruch 12, wobei die anfordernde elektronische Vorrichtung ferner eingerichtet ist, um das Token für die Zugriffsberechtigung auf die elektronische Information direkt von der erzeugenden elektronischen Vorrichtung (200) zu empfangen.

14. System nach Anspruch 13, wobei die anfordernde elektronische Vorrichtung ferner eingerichtet ist, um das Token für die Zugriffsberechtigung auf die elektronische Information über eine Infrarotdatenschnittstelle zwischen der erzeugenden elektronischen Vorrichtung (200) und der anfordernden elektronischen Vorrichtung (200) zu empfangen.

15. System nach einem der Ansprüche 12 bis 14, wobei die Information eine Mehrzahl an Datenfeldern umfasst, und wobei der vordefinierte Bestandteil der aktuellen Informationsversion ein untergeordnetes Set der Mehrzahl an Datenfeldern umfasst.

16. System nach Anspruch 15, wobei der Informationsserver (210) eingerichtet ist, um das Token für die Zugriffsberechtigung auf die Information gemeinsam mit einer Mehrzahl an leeren Datenfeldern zu empfangen, und wobei das Token für die Zugriffsberechtigung auf die Information ein untergeordnetes Set der Datenfelder erkennt, auf das eine anfordernde Vorrichtung zugreifen darf.

17. System nach Anspruch 16, wobei der Informationsserver (210) eingerichtet ist, um das durch das Token für die Zugriffsberechtigung auf die Information erkannte untergeordnete Set an leeren Datenfeldern aufzufüllen und der anfordernden Vorrichtung (200) bereitzustellen.

18. System nach einem der Ansprüche 12 bis 17, wobei eine der erzeugenden elektronischen Vorrichtung (200) und der anfordernden elektronische Vorrichtung (200) eine elektronische Vorrichtung umfassen, die aus der Gruppe bestehend aus einem Desktop-Computer, Laptop-Computer, Palmtop-Computer, Personal Data Assistant und Internet-fähigen drahtlosen Telefon ausgewählt wird.

19. Informationsserver zur Verwendung in dem System nach einem der Ansprüche 12 bis 18, wobei der Server eingerichtet ist zum:
Speichern einer ersten Informationsversion und einer aktuellen Informationsversion, die von einer erzeugenden elektronischen Vorrichtung (200) empfangen wird; und
Bereitstellen der aktuellen Informationsversion für eine anfordernde elektronische Vorrichtung (200) in Reaktion darauf, dass die anfordernde elektronische Vorrichtung (200) die aktuelle Informationsversion vom Server (210) anfordert; und
**dadurch gekennzeichnet dass**:
der Informationsserver (210) eingerichtet ist, um einen vordefinierten Bestandteil der aktuellen Informationsversion der anfordernden elektronischen Vorrichtung (200) in Reaktion darauf bereitzustellen, dass die anfordernde elektronische Vorrichtung (200) die aktuelle Informationsversion vom Server (210) anfordert, wobei der vordefinierte Bestandteil in Abhängigkeit von einer Identität der anfordernden elektronischen Vorrichtung (200) und einer mit der Vorrichtung verknüpften Informationszugriffsberechtigungsebene bereitgestellt wird, die durch das Token für die Zugriffsberechtigung auf die elektronische Information, das von der anfordernden elektronischen Vorrichtung (200) empfangen wird, erkannt wird,
wobei das Token für die Zugriffsberechtigung auf die elektronische Information zunächst von der anfordernden elektronischen Vorrichtung (200) von der erzeugenden elektronischen Vorrichtung (200) empfangen wird.

## Revendications

1. Procédé de fourniture d'informations courantes, comprenant:
la réception et le stockage d'une version initiale d'informations provenant d'un dispositif électronique d'origine (200) au niveau d'un serveur (210) sur un réseau de données;
la réception et le stockage d'une version courante des informations au niveau du serveur (210);
**caractérisé en ce que**:
la version courante des informations est fournie à un dispositif électronique demandeur (200) en réponse au fait que le dispositif électronique demandeur (200) demande la version courante des informations au serveur (210), et
un jeton électronique d'autorisation d'accès aux informations est reçu en provenance du dispositif électronique d'origine (200) au niveau du dispositif électronique demandeur (200), le jeton électronique d'autorisation d'accès aux informations identifiant un dispositif autorisé à accéder à des informations provenant dudit dispositif électronique d'origine (200) et un niveau d'autorisation d'accès aux informations associé à ce dispositif; et
dans lequel une partie prédéterminée de la version courante des informations est fournie du serveur (210) au dispositif électronique demandeur (200) en fonction d'une identité du dispositif électronique demandeur (200) et d'un niveau d'autorisation d'accès aux informations associé à ce dispositif identifié par le jeton électronique d'autorisation d'accès aux informations reçu en provenance du dispositif électronique demandeur (200).

2. Procédé selon la revendication 1, dans lequel le jeton électronique d'autorisation d'accès aux informations est reçu au niveau du dispositif électronique demandeur (200) directement en provenance du dispositif électronique d'origine (200).

3. Procédé selon la revendication 2, dans lequel le jeton électronique d'autorisation d'accès aux informations est reçu sur une interface de données infrarouge entre le dispositif électronique d'origine (200) et le dispositif électronique demandeur (200).

4. Procédé selon l'une quelconque des revendications précédentes, dans lequel les informations comprennent une pluralité de champs de données, et dans lequel la partie prédéterminée de la version courante des informations comprend un sous-ensemble de ladite pluralité de champs de données.

5. Procédé selon la revendication 4, dans lequel le jeton d'autorisation d'accès aux informations est reçu au niveau du serveur (210) conjointement avec une pluralité de champs de données vides, et dans lequel le jeton d'autorisation d'accès aux informations identifie un sous-ensemble des champs de données auquel un dispositif demandeur est autorisé à accéder.

6. Procédé selon la revendication 5, dans lequel les champs de données vides du sous-ensemble identifié par le jeton d'autorisation d'accès aux informations sont remplis par le serveur (210) et fournis au dispositif demandeur (200).

7. Procédé selon l'une quelconque des revendications précédentes, dans lequel la réception et le stockage d'une version courante des informations comprend le remplacement d'informations initialement stockées au niveau du serveur (210) par la version courante des informations.

8. Procédé selon la revendication 7, dans lequel, pour les étapes de réception et de fourniture de la version courante des informations, la version courante des informations comprend des informations créées par un individu sur lequel portent les informations, et l'étape de fourniture comprend la fourniture de la version courante des informations et d'informations de contenu supplémentaires.

9. Procédé selon l'une quelconque des revendications précédentes, dans lequel le dispositif électronique d'origine (200) et le dispositif électronique demandeur (200) comprennent un dispositif parmi: un agenda électronique, y compris un assistant numérique, un système d'ordinateur de poche, un système d'ordinateur portatif et un système d'ordinateur de bureau, et un téléphone sans fil compatible Internet.

10. Procédé selon l'une quelconque des revendications précédentes, dans lequel la version courante des informations comprend plus de données que la quantité des informations initiales stockées.

11. Procédé selon l'une quelconque des revendications 1 à 9, dans lequel la version courante des informations comprend moins de données que la quantité des informations initiales stockées.

12. Système, comprenant:
un dispositif électronique d'origine (200) agencé pour fournir une version initiale d'informations et une version courante d'informations;
un serveur d'informations (210) agencé pour stocker les informations reçues en provenance du dispositif électronique d'origine (200);
**caractérisé en ce que**:
un dispositif électronique demandeur (200) est agencé pour recevoir un jeton électronique d'autorisation d'accès aux informations en provenance du dispositif électronique d'origine (200), le jeton électronique d'autorisation d'accès aux informations identifiant un dispositif autorisé à accéder à des informations provenant du dispositif électronique d'origine (200) et un niveau d'autorisation d'accès aux informations associé à ce dispositif; et
le serveur d'informations (210) est agencé pour fournir une partie prédéterminée de la version courante des informations au dispositif électronique demandeur (200) en réponse au fait que le dispositif électronique demandeur (200) demande la version courante des informations au serveur (210), la partie prédéterminée étant fournie en fonction d'une identité du dispositif électronique demandeur (200) et d'un niveau d'autorisation d'accès aux informations associé à ce dispositif identifié par le jeton électronique d'autorisation d'accès aux informations reçu en provenance du dispositif électronique demandeur (200).

13. Système selon la revendication 12, dans lequel le dispositif électronique demandeur est en outre agencé pour recevoir le jeton électronique d'autorisation d'accès aux informations directement en provenance du dispositif électronique d'origine (200).

14. Système selon la revendication 13, dans lequel le dispositif électronique demandeur est en outre agencé pour recevoir le jeton électronique d'autorisation d'accès aux informations sur une interface de données infrarouge entre le dispositif électronique d'origine (200) et le dispositif électronique demandeur (200).

15. Système selon l'une quelconque des revendications 11 à 14, dans lequel les informations comprennent une pluralité de champs de données, et dans lequel la partie prédéterminée de la version courante des informations comprend un sous-ensemble de ladite pluralité de champs de données.

16. Système selon la revendication 15, dans lequel le serveur d'informations (210) est agencé pour recevoir le jeton d'autorisation d'accès aux informations conjointement avec une pluralité de champs de données vides, et dans lequel le jeton d'autorisation d'accès aux informations identifie un sous-ensemble des champs de données auquel un dispositif demandeur est autorisé à accéder.

17. Système selon la revendication 16, dans lequel le serveur d'informations (210) est agencé pour remplir les champs de données vides du sous-ensemble identifié par le jeton d'autorisation d'accès aux informations et pour fournir les champs de données remplis au dispositif demandeur (200).

18. Système selon l'une quelconque des revendications 12 à 17, dans lequel l'un du dispositif électronique d'origine (200) et du dispositif électronique demandeur (200) comprend un dispositif électronique choisi dans le groupe comprenant un ordinateur de bureau, un ordinateur portatif, un ordinateur de poche, un assistant numérique personnel et un téléphone sans fil compatible Internet.

19. Serveur d'informations à usage dans le système de l'une quelconque des revendications 12 à 18, le serveur étant agencé pour:
stocker une version initiale d'informations et une version courante d'informations reçues en provenance d'un dispositif électronique d'origine (200); et
fournir la version courante des informations à un dispositif électronique demandeur (200) en réponse au fait que le dispositif électronique demandeur (200) demande la version courante des informations au serveur (210); et
**caractérisé en ce que**:
le serveur d'informations (210) est agencé pour fournir une partie prédéterminée de la version courante des informations au dispositif électronique demandeur (200) en réponse au fait que le dispositif électronique demandeur (200) demande la version courante des informations au serveur (210), la partie prédéterminée étant fournie en fonction d'une identité du dispositif électronique demandeur (200) et d'un niveau d'autorisation d'accès aux informations associé à ce dispositif identifié par le jeton électronique d'autorisation d'accès aux informations reçu en provenance du dispositif électronique demandeur (200),
le jeton électronique d'autorisation d'accès aux informations étant initialement reçu par le dispositif électronique demandeur (200) en provenance du dispositif électronique d'origine (200).
